# NEUE EUROPÄISCHE PATENTSCHRIFT

(11) **EP 2 294 295 B2**
(45) Veröffentlichungstag und Bekanntmachung des Hinweises auf die Entscheidung über den Einspruch: **31.08.2016**
(45) Hinweis auf die Patenterteilung: 28.12.2011
(21) Anmeldenummer: 09769053.1
(22) Anmeldetag: 24.04.2009
(51) Int. Cl.: F01N 3/20

(54) **VERFAHREN ZUM BETREIBEN EINER ABGASNACHBEHANDLUNGSEINRICHTUNG FÜR EINE BRENNKRAFTMASCHINE**
METHOD FOR OPERATING A EXHAUST GAS AFTER-TREATMENT DEVICE FOR AN INTERNAL COMBUSTION ENGINE
PROCÉDÉ POUR FAIRE FONCTIONNER UN DISPOSITIF DE POST-TRAITEMENT DES GAZ D'ÉCHAPPEMENT D'UN MOTEUR À COMBUSTION INTERNE

(30) Priorität: 24.06.2008 DE 102008002612
(43) Veröffentlichungstag der Anmeldung: 16.03.2011
(73) Patentinhaber: Robert Bosch GmbH, 70442 Stuttgart (DE)
(72) Erfinder: KAEFER, Sebastian, 70197 Stuttgart (DE)
(86) Internationale Anmeldenummer: PCT/EP2009/054926
(87) Internationale Veröffentlichungsnummer: WO 2009/156204

(56) Entgegenhaltungen:
- EP-A- 0 928 884
- EP-A- 1 388 648
- EP-B1- 0 238 383
- WO-A-2007/017080
- WO-A1-99/01205
- WO-A1-99/67512
- WO-A2-2006/081824
- WO-A2-2008/077652
- CN-Y- 2 928 743
- DE-A1-102004 048 076
- DE-A1-102006 027 487
- DE-A1-102006 046 900

## Beschreibung

### Stand der Technik

Die bei Diesel- oder Magermotor-betriebenen Fahrzeugen immer schärfer werdenden Stickoxide NOx-Emissionsgrenzwerte erfordern ab einem bestimmten Fahrzeuggewicht eine die Stickoxide reduzierende Abgasnachbehandlung. Eine aus dem Stand der Technik bekannte, sehr wirksame Abgasnachbehandlung ist die sogenannte selektive katalytische Reaktion (SCR). Dabei wird ein Reduktionsmittel, nämlich Ammoniak, bei Bedarf in die Abgasnachbehandlungseinrichtung der Brennkraftmaschine eingedüst und reagiert in einem speziellen Katalysator zusammen mit den Stickoxiden der Abgase zu den unschädlichen Verbindungen Stickstoff und Wasser. Ein Beispiel einer solchen SCR-Abgasnachbehandlung mit gasförmigem Reduktionsmittel ist aus der WO 99/01205 bekannt.

Bei der aus dem Stand der Technik bekannten Abgasnachbehandlungseinrichtung ist in dem Speicherbehälter eine Ammoniakspeichersubstanz oder ein Gemisch verschiedener Ammoniakspeichersubstanzen, aus denen Ammoniak durch thermische Desorption oder Thermolyse, das heißt durch Temperatureinwirkung, freigesetzt wird, vorhanden. Geeignete Speichersubstanzen können zum Beispiel Salze sein, insbesondere Chloride oder Sulfate eines oder mehrerer Erdalkalielemente, wie zum Beispiel MgCl₂ oder CaCl₂, und/oder eines oder mehrerer 3d-Nebengruppenelemente wie Mangan, Eisen, Kobalt, Nickel, Kupfer und/oder Zink.

Weiterhin sind organische Absorber und Ammoniumsalze, wie zum Beispiel Ammoniumcarbamat, geeignete Ammoniakspeichersubstanzen, die in der erfindungsgemäßen Abgasnachbehandlungseinrichtung und dem erfindungsgemäßen Verfahren eingesetzt werden können. Kennzeichnend für alle diese Stoffe ist, dass der Zersetzungsprozess komplett reversibel ist. Dies bedeutet nichts anderes, als dass nach dem Abkühlen des Speichers auf das Ausgangstemperaturniveau die Ausgangssubstanzen wieder unverändert vorliegen.

Damit der Fahrer des mit einer solchen Abgasnachbehandlungseinrichtung ausgerüsteten Fahrzeugs den Speicherbehälter nicht selbst wieder befüllen muss, ist die Speicherkapazität des Speicherbehälters so ausgelegt, dass er lediglich im Rahmen eines turnusgemäßen Werkstattaufenthalts, wie beispielsweise zur Inspektion, wieder befüllt werden muss.

In der Praxis hat sich ein Speichervolumen etwa 10 I als geeignet erwiesen. Ein Speicher mit einem Volumen hat eine nicht unerhebliche Wärmekapazität.

Da aufgrund der Wärmeleitung innerhalb des Speicherbehälter eine nahezu konstante Temperatur im gesamten Speicherbehälter herrscht, muss bei jedem Start der Brennkraftmaschine der zwischenzeitlich abgekühlte Speicherbehälter wieder auf die Betriebstemperatur von beispielsweise 60° Celsius oder 70° Celsius erwärmt werden. Der dadurch verursachte Energiebedarf verursacht eine Erhöhung des Kraftstoffverbrauchs der Brennkraftmaschine.

### Offenbarung der Erfindung

Der Erfindung liegt die Aufgabe zugrunde, ein Verfahren zum Betreiben einer Abgasnachbehandlungseinrichtung bereitzustellen, deren Energiebedarf gegenüber dem Stand der Technik deutlich verringert ist. Außerdem soll die erfindungsgemäße Lösung kostengünstig und störungsfrei sein.

Diese Aufgabe wird erfindungsgemäß bei einem solchen Verfahren gemäss Anspruch 1 für eine Brennkraftmaschine mit einem Abgasrohr, mit einem SCR-Katalysator, mit einem Dosierventil zum Eindüsen eines gasförmigen Reduktionsmittels in das Abgasrohr, mit einem beheizbaren Speicherbehälter für das Reduktionsmittel und mit einem Pufferspeicher für das Reduktionsmittel unter Verwendung eines beheizbaren Pufferspeichers gelöst.

Weil der Pufferspeicher nur einen Bruchteil des Speichervolumens des Speicherbehälters aufweist, ist der Energiebedarf für das Aufheizen des Pufferspeichers sehr viel geringer als bei der Abgasnachbehandlungseinrichtung nach dem Stand der Technik. Der Speicherbehälter beim erfindungsgemäßen Verfahren wird, anders als im Stand der Technik, nicht mit jeder Inbetriebnahme der Brennkraftmaschine aufgeheizt, sondern nur, wenn der Pufferspeicher nahezu vollständig entleert ist und durch Reduktionsmittel aus dem beheizbaren Speicherbehälter wieder aufgefüllt werden muss.

Dadurch wird der Speicherbehälter nur noch vergleichsweise selten aufgeheizt, so dass die Energie zum Aufheizen des Speicherbehälters bei dem erfindungsgemäßen Verfahren gegenüber dem Stand der Technik deutlich reduziert werden kann. Dabei kann zwischen dem Pufferspeicher und dem Dosierventil ein Überdruckventil angeordnet werden.

Außerdem bietet das erfindungsgemäße Verfahren Vorteile bezüglich des Energiemanagements. So kann der Speicherbehälter und/oder der Pufferspeicher elektrisch beheizt werden. Alternativ ist es auch möglich, insbesondere den Speicherbehälter mit einem flüssigen Wärmeträger, insbesondere Kühlwasser oder dem Motoröl und/oder der in den Abgasen enthaltenen Abwärme der Brennkraftmaschine, zu beheizen. Dadurch kann die beim Betrieb der Brennkraftmaschine ohnehin abfallende Abwärme genutzt werden. Auch ist es möglich, durch eine Kombination von elektrischer Heizung und einer Heizung mittels eines flüssigen Wärmeträgers, die Vorteile beider Heizarten zu kombinieren und dadurch auch den Bedarf an elektrischer Energie zum Aufheizen des Speicherbehälters und/oder des Pufferspeichers zu minimieren.

Um sicherzustellen, dass der Pufferspeicher sich nicht in den Speicherbehälter entleert, kann zwischen dem Speicherbehälter und dem Pufferspeicher ein Rückschlagventil oder alternativ ein Schaltventil vorgesehen werden.

Des Weiteren kann vorgesehen werden, dass zwischen dem Pufferspeicher und dem Dosierventil ein Drucksensor angeordnet ist.

Mit Hilfe des Drucksensors ist es möglich, unter Berücksichtigung der Temperatur des Pufferspeichers beziehungsweise des Speicherbehälters den Ladezustand des Pufferspeichers zu ermitteln und dadurch das Nachfüllen des Pufferspeichers mit Ammoniak aus dem Speicherbehälter auszulösen.

In weiterer vorteilhafter Ausgestaltung der Erfindung ist vorgesehen, dass mindestens der Speicherbehälter eine Wärmedämmung aufweist. Dadurch werden die Energieverluste reduziert und dadurch der Heizenergiebedarf für den Speicherbehälter und/oder den Pufferspeicher weiter reduziert.

Da in modernen Kraftfahrzeugen häufig nur wenig Platz für einen Speicherbehälter zur Verfügung steht, ist in weiterer vorteilhafter Ausgestaltung der Erfindung vorgesehen, dass der Speicherbehälter in mehrere dezentral angeordnete Teilspeicherbehälter aufgeteilt ist. Dadurch ist es möglich, das erforderliche Speichervolumen auf verschiedene "Nischen" im Fahrzeug zu verteilen und dadurch den vorhandenen Bauraum optimal auszunutzen.

Wenn mehrere Teilspeicherbehälter vorhanden sind, dann ist jeweils zwischen dem Pufferspeicher und jedem Teilspeicherbehälter ein Rückschlagventil oder alternativ ein Schaltventil vorgesehen.

Die eingangs genannte Aufgabe wird bei einem Verfahren zum Betreiben einer Abgasnachbehandlungseinrichtung für eine Brennkraftmaschine mit einem Abgasrohr, mit einem SCR-Katalysator, mit einem Dosierventil zum Einspritzen eines gasförmigen Reduktionsmittels in das Abgasrohr mit einem beheizbaren Speicherbehälter für das Reduktionsmittel und mit einem beheizbaren Pufferspeicher, dadurch gelöst, dass der Pufferspeicher mit jeder Inbetriebnahme der Brennkraftmaschine aufgeheizt wird, und dass der Speicherbehälter nur aufgeheizt wird, wenn der Pufferspeicher geladen werden soll.

Dadurch werden die erfindungsgemäßen Vorteile realisiert, nämlich die Einsparung von Heizenergie für den Speicherbehälter.

Um vollautomatisch durch das Motorsteuergerät der Brennkraftmaschine feststellen zu können, ob der Pufferspeicher nachgeladen werden soll, ist in weiterer vorteilhafter Ausgestaltung des erfindungsgemäßen Verfahrens ein Drucksensor vorgesehen, der den im Pufferspeicher herrschenden Ammoniakdruck erfasst.

Da es zwischen dem Ladezustand und dem Ammoniakdruck im Pufferspeicher einen Zusammenhang gibt, der im Wesentlichen nur noch von der Temperatur des Pufferspeichers abhängt, ist es möglich, aus dem im Pufferspeicher herrschenden Ammoniakdruck den Ladezustand des Pufferspeichers zu ermitteln. Rechtzeitig vor dem Erreichen der völligen Entleerung des Pufferspeichers wird dann der Speicherbehälter aufgeheizt. Dies erfolgt erfindungsgemäß bevorzugt dann, wenn die Brennkraftmaschine noch im Betrieb ist. Dann hat das elektrische Bordnetz ausreichend Leistung, um den Speicherbehälter aufzuheizen. Besonders vorteilhaft ist es, wenn die Heizung des Speicherbehälters bevorzugt dann aktiviert wird, wenn sich die Brennkraftmaschine im Schubbetrieb, das heißt beispielsweise während eines Bremsvorgangs oder bei einer Bergabfahrt befindet. Dann nämlich kann die für den Antrieb der Lichtmaschine erforderliche mechanische Energie ohne zusätzlichen Kraftstoffaufwand aus der im Fahrzeug gespeicherten kinetischen Energie rückgewonnen werden.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen offenbarten Merkmale können sowohl einzeln als auch in beliebiger Kombination miteinander erfindungswesentlich sein.

Es zeigen:
- Figur 1: den schematischen Aufbau einer Abgasnachbehandlungseinrichtung; und
- Figur 2: ein Ausführungsbeispiel eines erfindungsgemäßen Verfahrens.

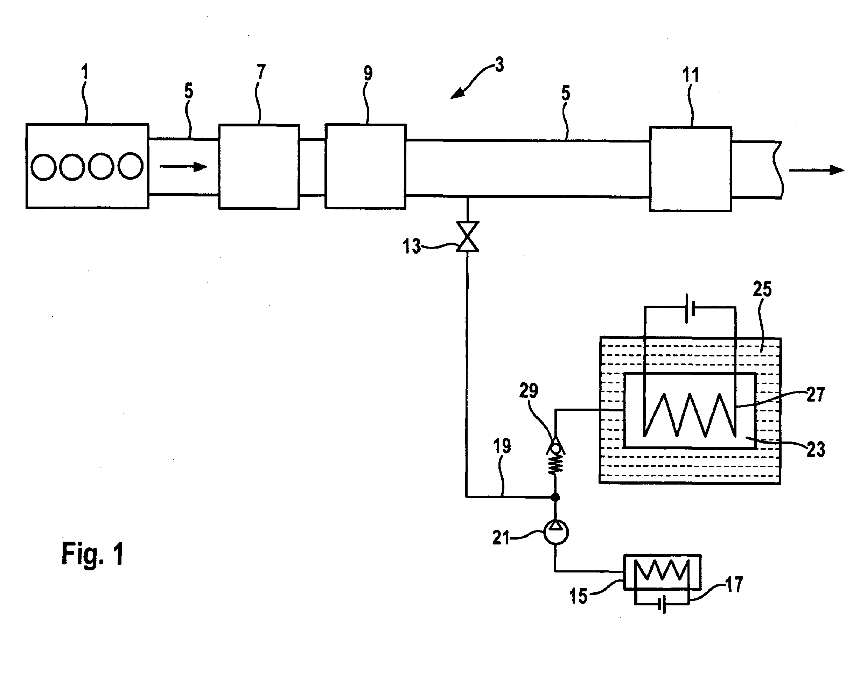

In Figur 1 ist eine Brennkraftmaschine 1 mit einer Abgasnachbehandlungseinrichtung 3 stark vereinfacht und schematisch dargestellt. Die Abgasnachbehandlungseinrichtung 3 umfasst ein Abgasrohr 5, einen Oxidationskatalysator 7, einen Partikelfilter 9 und einen SCR-Katalysator 11. Die Strömungsrichtung des Abgases durch das Abgasrohr 5 ist durch Pfeile (ohne Bezugszeichen) angedeutet.

Um den SCR-Katalysator 11 mit Reduktionsmittel zu versorgen, ist stromaufwärts des SCR-Katalysators 11 am Abgasrohr 5 ein Dosierventil 13 für das Reduktionsmittel angeordnet. Das Dosierventil 13 spritzt bei Bedarf gasförmiges Reduktionsmittel stromaufwärts des SCR-Katalysators 11 in das Abgasrohr 5 ein.

Das Dosierventil 13 wird über ein nicht dargestelltes Steuergerät der Brennkraftmaschine bei Bedarf geöffnet, so dass gasförmiges Ammoniak aus einem Pufferspeicher 15 in das Abgasrohr 5 strömen kann. Der Pufferspeicher 15 weist bei dem in Figur 1 dargestellten Ausführungsbeispiel eine elektrische Widerstandsheizung 17 auf, die mit jeder Inbetriebnahme der Brennkraftmaschine aktiviert wird. Selbstverständlich kann die elektrische Widerstandsheizung 17 eine nicht dargestellte Leistungsregelung aufweisen, um den Verbrauch an elektrischer Energie auf das erforderliche Maß zu beschränken.

In einer Verbindungsleitung 19 zwischen Pufferspeicher 15 und dem Dosierventil 13 ist ein Drucksensor 21 angeordnet. Dieser Drucksensor 21 kann zur Leistungsregelung der elektrischen Heizung 17 eingesetzt werden. Zwischen dem Druck im Pufferspeicher 15 beziehungsweise in der Verbindungsleitung 19, die mit gasförmigem Ammoniak gefüllt ist, und der Temperatur des Pufferspeichers 15 besteht ein eindeutiger Zusammenhang, so dass vom Ammoniakdruck, der vom Drucksensor 21 erfasst wird, die Temperatur des Pufferspeichers 15 ermittelt werden kann.

Des Weiteren ist es möglich, aus der Temperatur und dem Druck im Pufferspeicher 15 auf den Ladezustand des Pufferspeichers 15 zu schließen. Aus der Temperatur kann die im Pufferspeicher 15 enthaltene Energiemenge ermittelt werden. Unter Berücksichtigung des Drucks im Pufferspeicher 15 kann aus dieser Znergiemenge der Ladezustand des Pufferspeichers 15 ermittelt werden. Die im Pufferspeicher 15 enthaltene Energiemenge kann auch durch eine Energiebilanz, welche die eingebrachte Heizleistung und die Wärmeverluste berücksichtigt, ermittelt werden.

Der Drucksensor 21 ist ebenso wie das Dosierventil 13 über nicht dargestellte Signalleitungen mit dem Motorsteuergerät verbunden.

Des Weiteren ist bei der Abgasnachbehandlungseinrichtung ein Speicherbehälter 23 vorhanden, der von einer Wärmedämmung 25 umgeben ist. Des Weiteren weist der Speicherbehälter 23 ebenfalls eine Heizung, hier als elektrische Widerstandsheizung 27 ausgebildet auf. Zwischen dem Speicherbehälter 23 und dem Pufferspeicher 15 ist ein Rückschlagventil 29 angeordnet, welches dafür sorgt, dass nur gasförmiges Ammoniak aus dem Speicherbehälter 23 in den Pufferspeicher strömen kann und der Rückweg verschlossen ist. Das Speichervolumen des Pufferspeichers 15 ist deutlich kleiner als das Speichervolumen des Speicherbehälters 23, da letzteres für die Fahrstrecke zwischen zwei regelmäßigen Inspektionsintervallen von beispielsweise 20.000 km bis 30.000 km ausreichen muss.

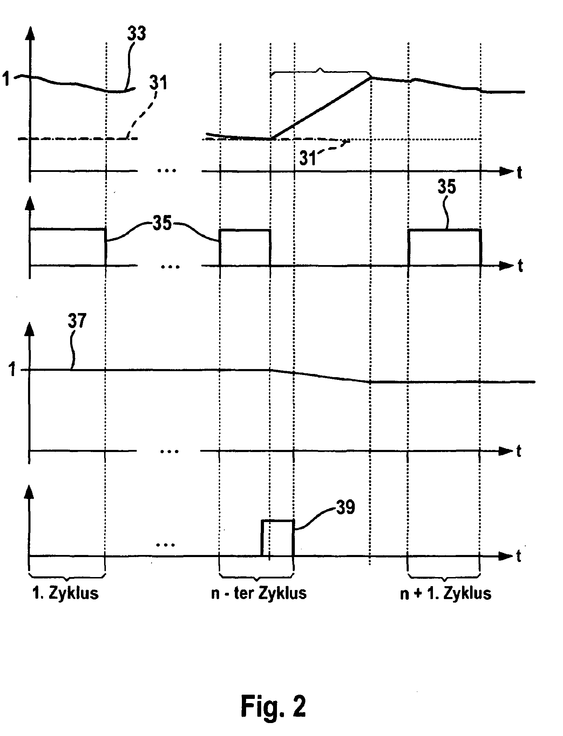

Das Speichervolumen des Pufferspeichers 15 ist so bemessen, dass es die durchschnittliche Fahrstrecke, die in einem Fahrzeug ohne Abstellen der Brennkraftmaschine zurückgelegt wird, mit dem im Pufferspeicher 15 gespeicherten Ammoniak zurückgelegt werden kann. Das Optimum liegt zwischen 10 und 100 Zyklen, bevorzugt zwischen 30 und 60 Zyklen bevor der Pufferspeicher nachgeladen werden muss. Der Pufferspeicher 15 wird nämlich mit jeder Inbetriebnahme der Brennkraftmaschine aufgeheizt und naturgemäß kühlt er nach dem Abstellen der Brennkraftmaschine durch Wärmeverluste an die Umgebung wieder ab. Es hat sich als vorteilhaft erwiesen, wenn die Speicherkapazität des Speicherbehälters 23 und des Pufferspeichers 15 von etwa 66:1, entsprechend beispielsweise einer Speicherkapazität des Speicherbehälters 23 von 10 kg und des Pufferspeichers 15 von 150 g. Der Speicherbehälter 23 wird nur dann aufgeheizt, wenn der Pufferspeicher 15 kurz davor ist, leer zu werden. Das Beladen des Pufferspeichers 15 mit im Speicherbehälter 23 gespeicherten Ammoniak wird nachfolgend anhand der Figur 2 detailliert erläutert.

In Figur 2 sind in insgesamt vier übereinander angeordneten Diagrammen die Ammoniakbeladung des Pufferspeichers 15 (siehe die Linie 33), die Einschaltzeit der elektrischen Widerstandsheizung 17 (siehe die Linie 35) des Pufferspeichers 15, die Ammoniakbeladung des Speicherbehälters 23 (siehe die Linie 37) und die Einschaltzeit der elektrischen Heizung 27 (siehe die Linie 39) des Speicherbehälters 23 aufgetragen.

In einem ersten Zyklus des Kraftfahrzeugs, das heißt wenn die Brennkraftmaschine gestartet wird und der Pufferspeicher 15 gefüllt ist, entsprechend einer Füllung mit dem normierten Füllgrad 1, wird mit Inbetriebnahme der Brennkraftmaschine die Heizung 17 des Pufferspeichers 15 aktiviert (siehe die Linie 35) und ist mit einer Ausnahme aktiv, solange sich das Fahrzeug im Betrieb befindet. Der Heizwärmebedarf verringert sich bei der Abgasnachbehandlungseinrichtung auf weniger als 20% eines herkömmlichen Systems. Wie sich aus der obersten Linie in Figur 2 ergibt, nimmt die Beladung des Pufferspeichers 15 während des ersten Zyklus kontinuierlich ab. Allerdings liegt der Ladezustand des Pufferspeichers 15 noch deutlich höher als eine Grenzbeladung 31, die durch eine gestrichelte Linie 31 in Figur 2 angedeutet ist.

Aus diesem Grund ist es nicht erforderlich, während des ersten Zyklus den Pufferspeicher 15 mit Ammoniak aus dem Speicherbehälter 23 zu beladen. Infolgedessen bleibt die Heizung 27 des Speicherbehälters 23 im ersten Zyklus ausgeschaltet und auch der Ladezustand des Speicherbehälters 23 bleibt unverändert auf dem Ausgangswert 1.

Wenn das Kraftfahrzeug abgestellt wird, das heißt ein Zyklus beendet ist, wird auch die Heizung 17 abgeschaltet und der Pufferspeicher 15 kühlt aus.

Wenn nun im n-ten Zyklus der Pufferspeicher 15 so weit entleert ist, dass er die Grenzbeladung 31 erreicht, wird ein Nachladen des Pufferspeichers 15 mit Ammoniak aus dem Speicherbehälter 23 erforderlich. Dies geschieht dadurch, dass mit Erreichen der Grenzbeladung 31 die Heizung 17 des Pufferspeichers abgeschaltet wird. Kurze Zeit vorher wird die Heizung 27 des Speicherbehälters 23 aktiviert, da der Speicherbehälter 23 eine gewisse Zeit braucht, bis er betriebsbereit ist. Durch das Abschalten der Heizung 17 des Pufferspeichers 15 nach dem Erreichen der Grenzbeladung kühlt der Pufferspeicher 15 aus, während gleichzeitig die Temperatur des Speicherbehälters 23 ansteigt. Dadurch ergibt sich ein Überdruck des Ammoniaks im Speicherbehälter 23, der dazu führt, dass durch das Rückschlagventil 29 hindurch gasförmiges Ammoniak aus dem Speicherbehälter 23 in den Pufferspeicher 15 strömt. Dort wird es aufgrund der Reversibilität des Speichervorgangs und der abnehmendem Temperatur des Pufferspeichers 15 im Speichermaterial eingelagert. Dieser Vorgang kann sich auch nach dem Abstellen des Fahrzeugs, das heißt nach dem Ende des n-ten Zyklus fortsetzen, bis der Pufferspeicher 15 wieder die Ausgangsbeladung von 1,0 erreicht hat. Danach beginnt im n+1-ten Zyklus das bereits anhand des ersten Zyklus beschriebene Verfahren von neuem.

Schon durch diese einfache Schilderung ist deutlich geworden, dass der Speicherbehälter 23 nur bei jedem n-ten Betriebszyklus einmal aufgeheizt werden muss, während er bei einem Verfahren nach dem Stand der Technik bei jedem Fahrzyklus aufgeheizt werden müsste. Dadurch ergibt sich eine drastische Energieeinsparung für das Aufheizen des Speicherbehälters 23 und infolgedessen eine durchaus relevante Kraftstoffeinsparung.

## Patentansprüche

1. Verfahren zum Betreiben einer Abgasnachbehandlungseinrichtung für eine Brennkraftmaschine mit einem Abgasrohr (5), mit einem SCR-Katalysator (11), mit einem Dosierventil (13) zum Einbringen eines gasförmigen Reduktionsmittels in das Abgasrohr (5), mit einem beheizbaren Speicherbehälter (23) für das Reduktionsmittel und mit einem ein Speichermedium für das Reduktionsmittel enthaltenden, beheizbaren Pufferspeicher (15), wobei das Speichermedium derart ausgebildet ist, dass das Reduktionsmittel durch Temperatureinwirkung aus dem Speichermedium in Gasform freigesetzt wird, und wobei der Freisetzungsprozess reversibel ist, **dadurch gekennzeichnet, dass** der Pufferspeicher (15) mit jeder Inbetriebnahme der Brennkraftmaschine aufgeheizt wird und dass der Speicherbehälter (23) nur zum Beladen des Pufferspeichers (15) aufgeheizt wird, wobei der Ladezustand des Pufferspeichers (15) über die im Pufferspeicher (15) herrschende Temperatur (T) des Speichermediums unter Berücksichtigung des Druck (p) ermittelt wird.

2. Verfahren nach Anspruch 1, **dadurch gekennzeichnet, dass** der Pufferspeicher (15) während der Beladung nicht beheizt wird.

3. Verfahren nach einem der vorhergehenden Ansprüche, **dadurch gekennzeichnet, dass** eine elektrische Heizung (27) des Speicherbehälters (23) während des Betriebs der Brennkraftmaschine (1), bevorzugt wenn sich die Brennkraftmaschine (1) im Schubbetrieb befindet, aktiviert wird.

4. Computerprogramm für ein Steuergerät einer Brennkraftmaschine (1), **dadurch gekennzeichnet, dass** es ein Verfahren nach einem der vorhergehenden Ansprüche durchführt, wenn es abgearbeitet wird.

5. Steuergerät für eine Brennkraftmaschine (1), **dadurch gekennzeichnet, dass** es nach einem der vorstehend beanspruchten Verfahren arbeitet.

## Claims

1. Method for operating an exhaust-gas aftertreatment device for an internal combustion engine, having an exhaust pipe (5), having an SCR catalytic converter (11), having a dosing valve (13) for introducing a gaseous reducing agent into the exhaust pipe (5), having a heatable storage vessel (23) for the reducing agent, and having a heatable buffer store (15) which contains a storage medium for the reducing agent, wherein the storage medium is designed such that the reducing agent is released in gaseous form from the storage medium as a result of the action of temperature, and wherein the release process is reversible, **characterized in that** the buffer store (15) is heated upon every start-up of the internal combustion engine, and **in that** the storage vessel (23) is heated only in order to charge the buffer store (15), wherein the charging state of the buffer store (15) is determined by means of the storage medium temperature (T) prevailing in the buffer store (15), taking into consideration the pressure (p).

2. Method according to Claim 1, **characterized in that** the buffer store (15) is not heated during the charging process.

3. Method according to one of the preceding claims, **characterized in that** an electric heater (27) of the storage vessel (23) is activated during the operation of the internal combustion engine (1), preferably when the internal combustion engine (1) is in the overrun mode.

4. Computer program for a control unit of an internal combustion engine (1), **characterized in that** it carries out a method according to one of the preceding claims when it is executed.

5. Control unit for an internal combustion engine (1), **characterized in that** it operates according to one of the methods claimed above.

## Revendications

1. Procédé pour faire fonctionner un dispositif de post-traitement des gaz d'échappement d'un moteur à combustion interne comprenant un tuyau d'échappement (5), un catalyseur à SCR (11), une soupape de dosage (13) pour l'introduction d'un agent réducteur gazeux dans le tuyau d'échappement (5), un récipient de stockage chauffable (23) pour l'agent réducteur et un réservoir tampon chauffable (15), contenant un milieu de stockage pour l'agent réducteur, le milieu de stockage étant réalisé de telle sorte que l'agent réducteur soit libéré du milieu de stockage sous forme gazeuse sous l'effet de la température, et le processus de libération étant réversible, **caractérisé en ce que** le réservoir tampon (15) est chauffé à chaque mise en service du moteur à combustion interne et **en ce que** le récipient de stockage (23) n'est chauffé que lors de la charge du réservoir tampon (15), l'état de charge du réservoir tampon (15) étant déterminé par le biais de la température (T) du milieu de stockage régnant dans le réservoir tampon (15) en tenant compte de la pression (p).

2. Procédé selon la revendication 1, **caractérisé en ce que** le réservoir tampon (15) n'est pas chauffé pendant la charge.

3. Procédé selon l'une quelconque des revendications précédentes, **caractérisé en ce qu'**un chauffage électrique (27) du récipient de stockage (23) est activé pendant le fonctionnement du moteur à combustion interne (1), de préférence quand le moteur à combustion interne (1) fonctionne en mode de poussée.

4. Programme informatique pour un appareil de commande d'un moteur à combustion interne (1), **caractérisé en ce qu'**il met en oeuvre un procédé selon l'une quelconque des revendications précédentes, lorsqu'il est exécuté.

5. Appareil de commande pour un moteur à combustion interne (1), **caractérisé en ce qu'**il fonctionne selon l'un des procédés revendiqués ci-dessus.
